# FASCICULE DE BREVET EUROPEEN

(11) **EP 1 721 511 B1**
(45) Date de publication et mention de la délivrance du brevet: **20.01.2010**
(21) Numéro de dépôt: 06113178.5
(22) Date de dépôt: 27.04.2006
(51) Int. Cl.: A01D 57/20

(54) **Faucheuse avec des ensembles de fauche repliables**
Mähmaschine mit klappbaren Mäheinheiten
Mower with foldable mowing units

(30) Priorité: 10.05.2005 FR 0504656
(43) Date de publication de la demande: 15.11.2006
(73) Titulaire: KUHN S.A., 67700 Saverne (FR)
(72) Inventeur: Halter, Cédric M., 67310, Wasselonne (FR); Walch, Martin, 67490, Dettwiller (FR)
(74) Mandataire: Andres, Jean-Claude

(56) Documents cités:
- EP-A- 1 321 022
- EP-A- 1 389 413
- US-A- 5 351 468
- US-A1- 2001 003 239
- US-A1- 2001 045 087

## Description

La présente invention concerne une faucheuse de produits sur pied comportant un bâti support sur lequel sont articulés au moyen d'axes sensiblement horizontaux au moins deux ensembles de fauche comportant chacun un cadre porteur d'au moins une barre de coupe et une bande transporteuse pour regrouper les produits fauchés, lesquels ensembles de fauche peuvent être déplacés autour desdits axes d'articulation d'une position de travail sensiblement horizontale dans une position de transport sensiblement verticale et vice versa.

En position de transport ces faucheuses doivent avoir une largeur totale minimale de manière à permettre aux utilisateurs de circuler sans trop de contraintes sur les routes et les chemins. Pour cette raison, la largeur des bandes transporteuses doit être réduite afin qu'elles ne dépassent pas de trop de chaque côté les barres de coupe au transport. Or, comme la largeur de ces bandes transporteuses détermine grandement le volume des produits qu'elles peuvent déplacer, les largeurs de travail de ces faucheuses sont limitées. Il n'est en effet pas possible d'augmenter lesdites largeurs de travail si l'on veut que les machines ne soient pas trop exposées aux risques d'engorgement et blocage au niveau des bandes transporteuses.

La présente invention a pour but de remédier aux inconvénients précités des machines connues, comme la machine décrite dans le document EP-A-1321022-A, qui correspond au préambule de la revendication 1, avec les moyens caractérisants de la revendication.

A cet effet, une importante caractéristique de l'invention consiste en ce que les ensembles de fauche comportent des bandes transporteuses qui sont articulées par rapport aux barres de coupe au moyen d'axes sensiblement parallèles auxdites barres de coupe et qu'ils comportent des moyens déplaçant automatiquement lesdites bandes transporteuses autour de leurs axes d'articulation pour les rapprocher davantage des cadres porteurs correspondant et par conséquent du milieu de la faucheuse lors de la mise en position de transport.

Ce déplacement automatique des bandes transporteuses permet de réduire la largeur de la machine au transport en les ramenant à l'arrière des barres de coupe et d'éviter ainsi qu'elles s'étendent davantage vers les côtés latéraux que lesdites barres de coupe elles-mêmes. Il est ainsi possible d'augmenter la largeur de ces bandes transporteuses pour améliorer leur capacité de déplacement des produits sans que cela ait une influence néfaste sur les possibilités de transport de la machine. Cette amélioration de la capacité de déplacement des produits permet d'avoir des ensembles de fauche avec des largeurs de travail plus importantes afin d'augmenter le rendement.

D'autres caractéristiques et avantages de l'invention ressortiront des revendications et de la description ci-après d'un exemple de réalisation non limitatif de l'invention, avec référence aux dessins annexés dans lesquels :
- la figure 1 représente une machine selon l'invention en position de travail,
- la figure 2 représente la machine selon l'invention en position de transport,
- la figure 3 représente une vue de détail des moyens de déplacement des bandes transporteuses,
- la figure 4 représente une vue de détail du déflecteur d'andainage en position de travail,
- la figure 5 représente une vue de détail du déflecteur d'andainage en position de transport.

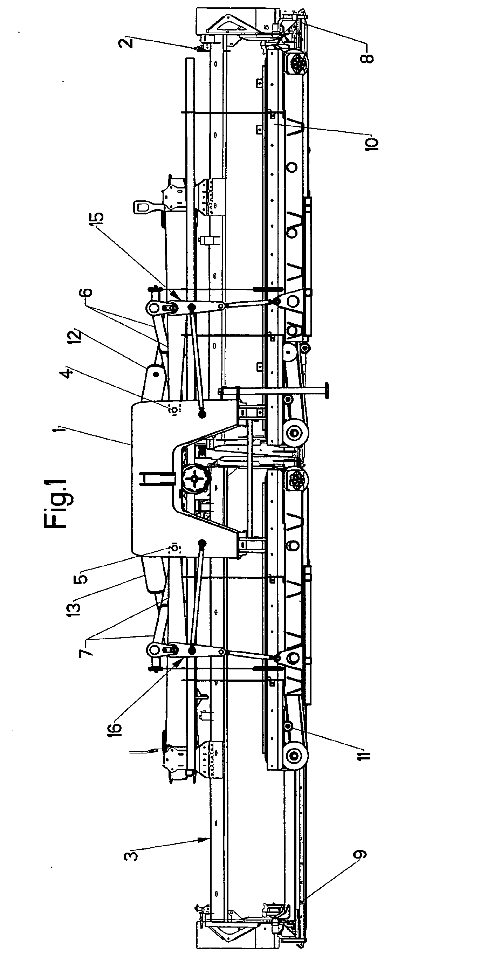

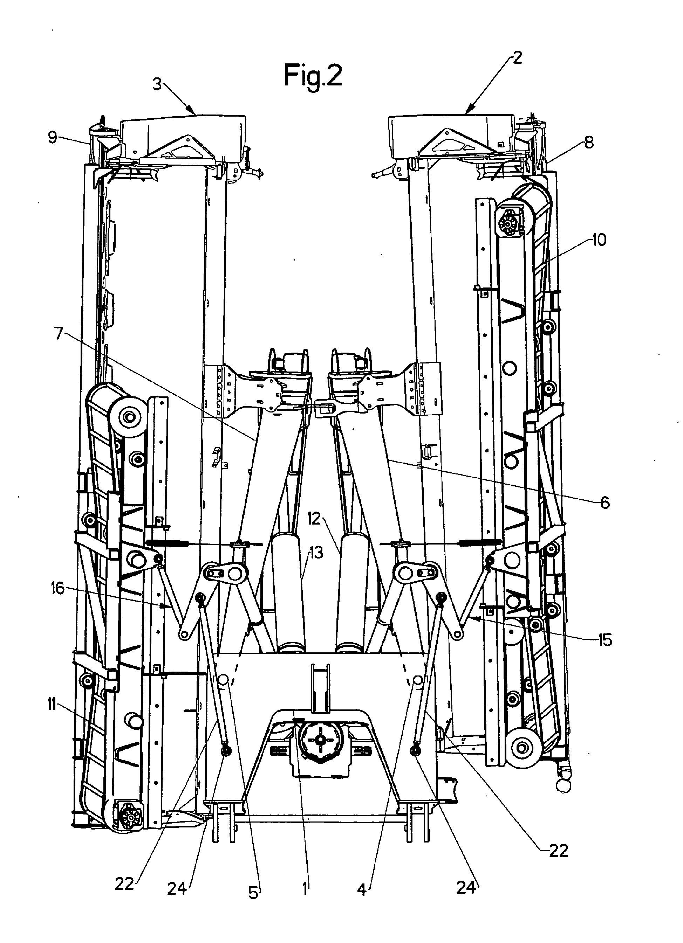

Telle qu'elle est représentée sur les figures 1 et 2, la faucheuse selon l'invention comporte un bâti support (1) pouvant être relié à l'avant d'un tracteur servant à animer la machine et à la déplacer dans le sens d'avancement (A). Sur ledit bâti (1) sont articulés deux ensembles de fauche (2 et 3) au moyen d'axes sensiblement horizontaux (4 et 5). Chacun de ces ensembles de fauche (2 et 3) comporte un cadre porteur (6 et 7) d'au moins une barre de coupe (8 et 9) et une bande transporteuse (10 et 11) pour regrouper les produits fauchés sur un andain pouvant être déposé près d'une des extrémités latérales de la machine. Les barres de coupe (8 et 9) peuvent être du type à disques et peuvent être associées à des rotors ou des rouleaux de conditionnement des produits fauchés. Les ensembles de fauche (2 et 3) peuvent être déplacés autour de leurs axes d'articulation (4 et 5) d'une position de travail sensiblement horizontale (figure 1) dans une position de transport sensiblement verticale (figure 2) et vice versa. Ces déplacements sont effectués au moyen de vérins hydrauliques (12 et 13) reliés au bâti (1) et à l'ensemble de fauche (2, 3) correspondant.

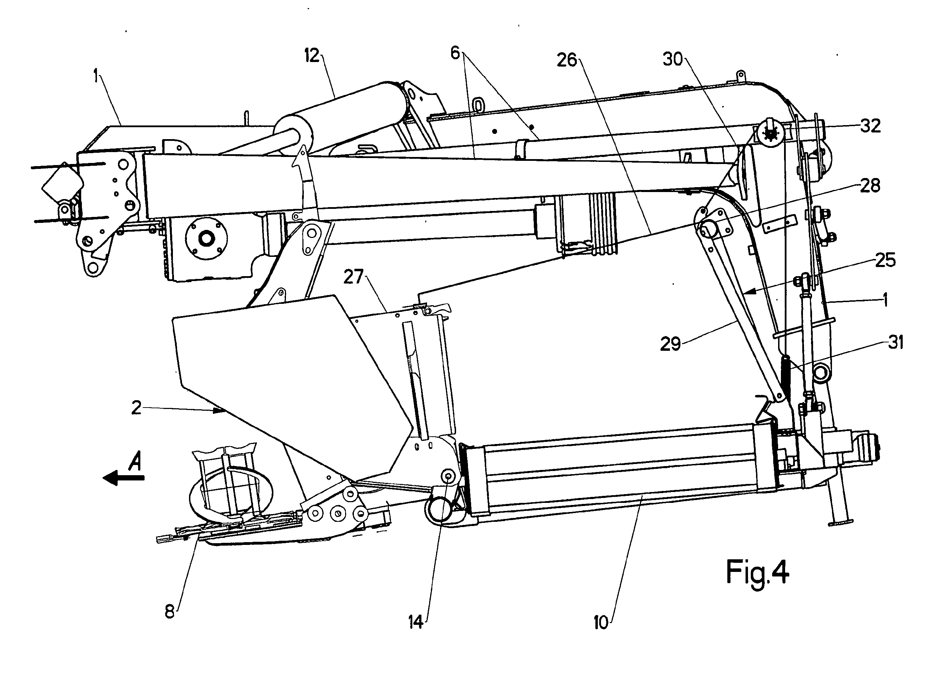

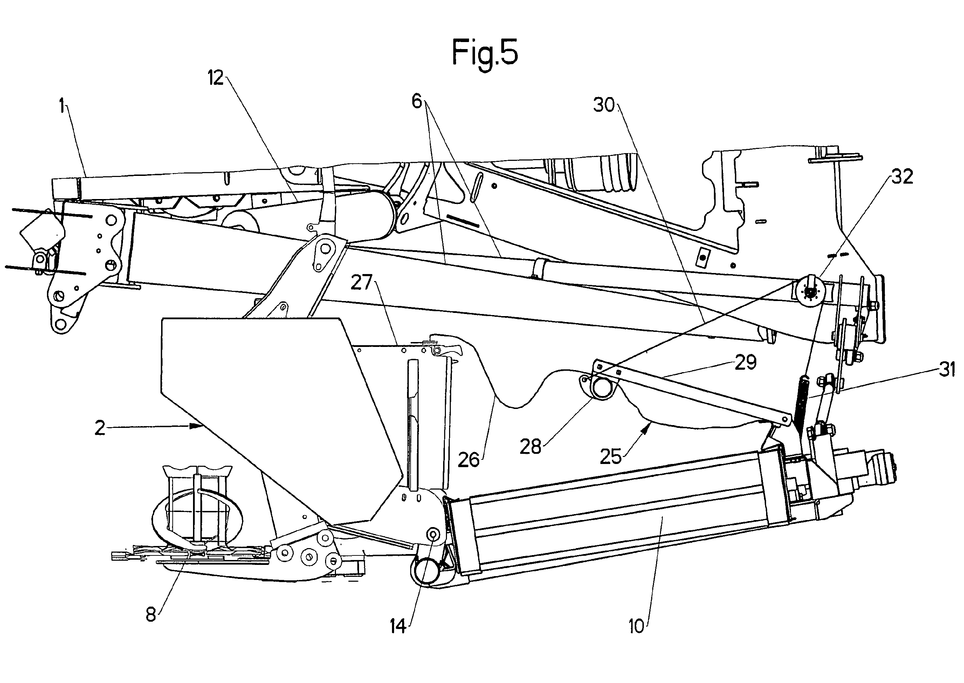

Les bandes transporteuses (10 et 11) sont articulées par rapport aux barres de coupe (8 et 9) au moyen d'axes (14) sensiblement parallèles auxdites barres de coupe (8 et 9) et situés sur le côté arrière de celles-ci (voir figures 4 et 5). Des moyens (15 et 16) sont prévus pour déplacer automatiquement lesdites bandes transporteuses (10 et 11) par rapport aux barres de coupe (8 et 9), autour de leurs axes d'articulation (14) pour rapprocher davantage leurs parties arrière, qui sont éloignées des barres de coupe (8 et 9), des cadres porteurs (6 et 7) correspondants et par conséquent du milieu de la faucheuse lors de la mise en position de transport. Inversement ces moyens (15 et 16) éloignent les parties arrière des bandes transporteuses (10 et 11) des cadres porteurs (6 et 7) lors de la mise en position de travail.

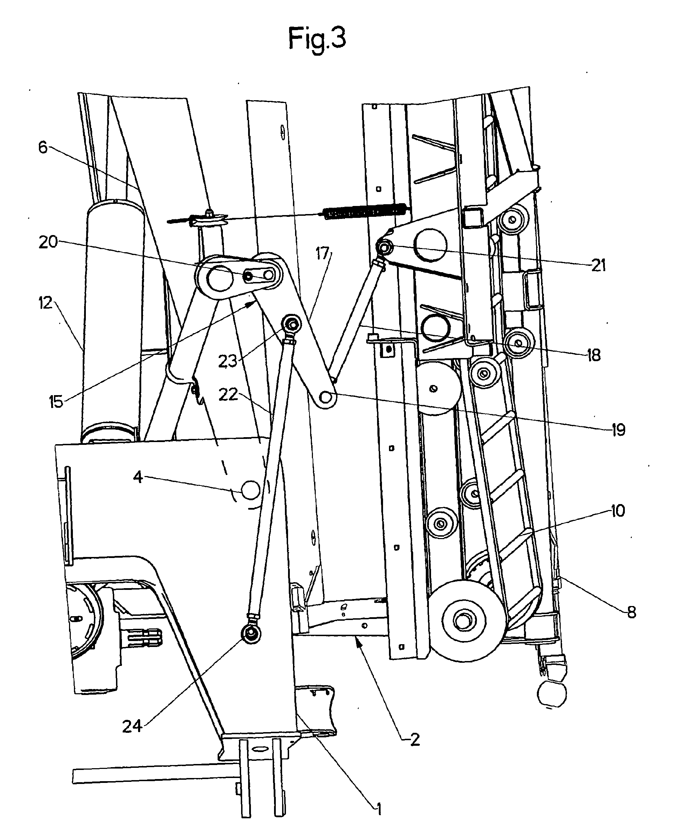

Il ressort en particulier de la figure 3 que les moyens (15 et 16) de déplacement de chaque bande transporteuse (10 et 11) sont constitués par deux bielles (17 et 18) qui sont articulées entre elles au moyen d'un axe (19) et dont la première (17) est articulée sur le cadre porteur (6, 7) correspondant au moyen d'un axe (20) et la deuxième (18) sur la partie arrière de la bande transporteuse (10, 11) correspondante au moyen d'un axe (21), ainsi que par une troisième bielle (22) qui est articulée sur la première bielle (17) par un axe (23) et sur le bâti support (1) par un axe (24). Lesdits axes d'articulation (19, 20, 21, 23 et 24) des bielles (17, 18 et 22) sont sensiblement parallèles aux axes d'articulation (4 et 5) des ensembles de fauche (2 et 3) sur le bâti (1). Ils peuvent avantageusement comporter des rotules. L'axe d'articulation (24) de chaque troisième bielle (22) sur le bâti support (1) est décalé vers le milieu de la machine et/ou vers le sol par rapport à l'axe d'articulation (4, 5) de l'ensemble de fauche (2, 3) correspondant sur ledit bâti support (1). Grâce à ce décalage, cette troisième bielle (22) déplace la première bielle (17) et la deuxième bielle (18) lors de la mise en position de transport et en position de travail des ensembles de fauche (2 et 3).

On voit sur les figures 4 et 5 qu'un déflecteur d'andainage repliable (25) se situe sur le côté arrière et au-dessus de la bande transporteuse (10, 11) de chaque ensemble de fauche (2, 3). Le déflecteur (25) empêche la projection de produits vers l'arrière par-dessus ladite bande transporteuse (10, 11). Ce déflecteur (25) se rapproche automatiquement de la bande transporteuse (10, 11) correspondante lors de la mise en position de transport. Inversement, il s'éloigne automatiquement de ladite bande transporteuse (10, 11) lors de la mise en position de travail de manière à augmenter l'espace libre pour le passage des produits transportés.

Le déflecteur repliable (25) de chaque ensemble de fauche (2 et 3) est avantageusement constitué par une toile souple (26) reliée d'une part au côté arrière de la bande transporteuse (10, 11) correspondante et, d'autre part à un protecteur (27) situé au-dessus de la barre de coupe (8, 9) correspondante. Cette toile souple (26) passe en sus sur un guide déplaçable (28) en forme de tige qui s'étend parallèlement à la bande transporteuse (10, 11) correspondante. Ce guide (28) est lié à des pattes (29) rigides qui sont articulées sur le côté arrière de la bande transporteuse (10, 11) correspondante. Ledit guide (28) est en sus lié au moyen d'un câble (30) à un ressort de traction (31) qui tend à l'écarter de la bande transporteuse (10, 11) correspondante. Le câble (30) passe sur une poulie (32) qui est liée au cadre porteur (6, 7) correspondant.

Durant le travail, les ensembles de fauche (2 et 3) sont abaissés au niveau du sol et sont déplacés dans le sens d'avancement (A). Les barres de coupe (8 et 9) coupent les produits sur pied et les transfèrent sur les bandes transporteuses (10 et 11). Celles-ci sont plus ou moins horizontales et sont animées de telle sorte qu'elles transportent lesdits produits vers le côté latéral en vue de la dépose sous la forme d'un andain. Dans cette position, les ressorts de traction (31) tirent les guides (28) vers l'arrière de sorte que les déflecteurs repliables (25) soient tendus et que l'espace entre eux et les bandes transporteuses (10 et 11) soit important.

Pour le transport, les ensembles de fauche (2 et 3) sont relevés dans des positions sensiblement verticales autour des axes d'articulation (4 et 5) au moyen des vérins hydrauliques (12 et 13). Simultanément, les troisièmes bielles (22) exercent une traction sur les première et deuxième bielles (17 et 18) et les replient en forme de V. De ce fait, ces dernières tirent sur les bandes transporteuses (10 et 11) et les font pivoter autour de leurs axes d'articulation (14) avec les barres de coupe (8 et 9), en direction des cadres supports (6 et 7).

Ainsi, les parties arrière de ces bandes transporteuses (10 et 11) se rapprochent davantage au milieu de la machine en position de transport de manière à réduire la largeur de l'ensemble.

Ledit pivotement des bandes transporteuses (10 et 11) vers les cadres supports (6 et 7) détend les ressorts de traction (31). Ces derniers n'exercent alors plus de traction, par l'intermédiaire des câbles (30), sur les guides (28) de sorte que ceux-ci se déplacent vers l'avant autour des articulations de leurs pattes (29) sur le côté arrière des bandes transporteuses (10 et 11). Les protecteurs (25) se replient alors en direction des bandes transporteuses (10 et 11), ce qui a pour effet de réduire le volume qu'ils occupent en position de transport en vue d'une plus grande réduction de la largeur de la machine.

Lors du retour en position de travail, les bielles (17, 18 et 22) ramènent automatiquement les bandes transporteuses (10 et 11) et les protecteurs repliables (25) dans les positions requises pour le travail.

Il est bien évident que l'invention n'est pas limitée au mode de réalisation décrit ci-dessus et représenté sur les dessins annexés. Des modifications restent possibles, notamment en ce qui concerne la constitution ou le nombre des divers éléments ou par substitution d'équivalents techniques, sans pour autant sortir du domaine de protection, tel que défini dans les revendications.

## Revendications

1. Faucheuse comportant un bâti support (1) sur lequel sont articulés au moyen d'axes sensiblement horizontaux (4 et 5) au moins deux ensembles de fauche (2 et 3) comportant chacun un cadre porteur (6, 7) d'au moins une barre de coupe (8, 9) et d'une bande transporteuse (10, 11) pour regrouper les produits fauchés, lesquels ensembles de fauche (2 et 3) peuvent être déplacés autour desdits axes d'articulation (4 et 5) d'une position de travail sensiblement horizontale dans une position de transport sensiblement verticale, les ensembles de fauche (2 et 3) comportant des bandes transporteuses (10 et 11) qui sont articulées par rapport aux barres de coupe (8 et 9) au moyen d'axes (14) sensiblement parallèles auxdites barres de coupe (8 et 9), ***caractérisée par le fait* que** les ensembles de gauche (2,3) comportent des moyens (15 et 16) déplaçant automatiquement lesdites bandes transporteuses (10 et 11) par rapport aux barres de coupe (8 et 9), autour de leurs axes d'articulation (14), pour les rapprocher davantage des cadres porteurs (6 et 7) correspondants et par conséquent du milieu de la faucheuse lors de la mise en position de transport.

2. Faucheuse selon la revendication 1, ***caractérisée par le fait* que** les moyens (15 et 16) de déplacement de chaque bande transporteuse (10, 11) sont constitués par deux bielles (17 et 18) articulées entre elles au moyen d'un axe (19) et dont la première (17) est articulée sur le cadre support (6, 7) correspondant au moyen d'un axe (20) et la deuxième (18) sur la bande transporteuse (10, 11) correspondante au moyen d'un axe (21) et par une troisième bielle (22) qui est articulée sur la première bielle par un axe (23) et sur le bâti support (1) par un axe (24).

3. Faucheuse selon la revendication 2, **caractérisée par *le fait* que** l'axe d'articulation (24) de la troisième bielle (22) sur le bâti support (1) est décalé par rapport à l'axe d'articulation sensiblement horizontal (4, 5) de l'ensemble de fauche (2, 3) correspondant sur ledit bâti support (1).

4. Faucheuse selon la revendication 3, ***caractérisée par le fait* que** l'axe d'articulation (24) de la troisième bielle (22) sur le bâti support (1) se situe plus près du sol et/ou plus vers le milieu de la faucheuse que l'axe d'articulation (4, 5) de l'ensemble de fauche (2, 3) correspondant sur ledit bâti support (1).

5. Faucheuse selon l'une quelconque des revendications précédentes, ***caractérisée par le fait* qu'**un déflecteur d'andainage repliable (25) est situé sur le côté arrière et au-dessus de la bande transporteuse (10, 11) de chaque ensemble de fauche (2, 3).

6. Faucheuse selon la revendication 5, ***caractérisée par le fait* que** le déflecteur repliable (25) se rapproche automatiquement de la bande transporteuse (10, 11) correspondante lors de la mise en position de transport.

7. Faucheuse selon la revendication 5 ou 6, ***caractérisée par le fait* que** le déflecteur repliable (25) est constitué par une toile souple (26) reliée au côté arrière de la bande transporteuse (10, 11) correspondante et à un protecteur fixe (27) situé au-dessus de la barre de coupe (8, 9) correspondante, laquelle toile souple (26) passe en sus sur un guide déplaçable (28).

8. Faucheuse selon la revendication 7, ***caractérisée par le fait* que** le guide déplaçable (28) est lié à des pattes (29) qui sont articulées sur le côté arrière de la bande transporteuse (10, 11) correspondante.

9. Faucheuse selon la revendication 8, ***caractérisée par le fait* que** le guide déplaçable (28) est lié au moyen d'un câble (30) à un ressort de traction (31) qui tend à l'écarter de la bande transporteuse (10, 11) correspondante.

10. Faucheuse selon la revendication 9, ***caractérisée par le fait* que** le câble (30) passe sur une poulie (32) qui est liée au cadre porteur (6, 7) correspondant.

## Claims

1. Mower comprising a support structure (1) on which are articulated by means of substantially horizontal axes (4 and 5) at least two mowing units (2 and 3) each comprising a frame (6, 7) carrying at least one cutterbar (8, 9) and a conveyor belt (10, 11) for grouping the mown products, which mowing units (2 and 3) can be moved about the said axes of articulation (4 and 5) from a substantially horizontal working position into a substantially vertical transport position, the mowing units (2 and 3) comprising conveyor belts (10 and 11) that are articulated relative to the cutterbars (8 and 9) by means of axes (14) substantially parallel to the said cutterbars (8 and 9), ***characterized in* that** the mowing units (2, 3) comprise means (15 and 16) automatically moving the said conveyor belts (10 and 11) relative to the cutterbars (8 and 9) about their axes of articulation (14) to bring them closer to the corresponding carrier frames (6 and 7) and consequently to the middle of the mower when placed in the transport position.

2. Mower according to claim 1, ***characterized in* that** the means (15 and 16) for moving each conveyor belt (10, 11) consist of two rods (17 and 18) articulated with one another by means of an axis (19) and the first (17) of which is articulated on the corresponding carrier frame (6, 7) by means of an axis (20) and the second (18) on the corresponding conveyor belt (10, 11) by means of an axis (21), and of a third rod (22) that is articulated on the first rod via an axis (23) and on the support structure (1) via an axis (24).

3. Mower according to claim 2, ***characterized in* that** the axis of articulation (24) of the third rod (22) on the support structure (1) is offset relative to the substantially horizontal axis of articulation (4, 5) of the corresponding mowing unit (2, 3) on the said support structure (1).

4. Mower according to claim 3, ***characterized in* that** the axis of articulation (24) of the third rod (22) on the support structure (1) is situated closer to the ground and/or closer to the middle of the mower than the axis of articulation (4, 5) of the corresponding mowing unit (2, 3) on the said support structure (1).

5. Mower according to anyone of the preceding claims, ***characterized in* that** a foldable swath deflector (25) is situated on the rear side and above the conveyor belt (10, 11) of each mowing unit (2, 3).

6. Mower according to claim 5, ***characterized in* that** the foldable deflector (25) automatically moves closer to the corresponding conveyor belt (10, 11) when placed in the transport position.

7. Mower according to claim 5 or 6, ***characterized in* that** the foldable deflector (25) consists of a flexible canvas (26) connected to the rear side of the corresponding conveyor belt (10, 11) and to a fixed guard (27) situated above the corresponding cutterbar (8, 9), which flexible canvas (26) additionally passes over a movable guide (28).

8. Mower according to claim 7, ***characterized in* that** the movable guide (28) is connected to cramps (29) that are articulated on the rear side of the corresponding conveyor belt (10, 11).

9. Mower according to claim 8, ***characterized in* that** the movable guide (28) is connected by means of a cable (30) to a draw-spring (31) which tends to move it away from the corresponding conveyor belt (10, 11).

10. Mower according to claim 9, ***characterized in* that** the cable (30) passes over a pulley (32) that is connected to the corresponding carrier frame (6, 7).

## Patentansprüche

1. Mähmaschine mit einem Stützgestell (1), auf dem mittels im Wesentlichen horizontaler Achsen (4 und 5) mindestens zwei Mäheinheiten (2 und 3) angelenkt sind, jeweils mit einem Tragrahmen (6, 7) für mindestens einen Mähbalken (8, 9) und einem Förderband (10, 11), um die abgemähten Produkte zusammen zu legen, wobei die Mäheinheiten (2 und 3) um die Gelenkachsen (4 und 5) von einer im Wesentlichen horizontalen Arbeitsposition in eine im Wesentlichen vertikale Transportposition verschoben werden können, wobei die Mäheinheiten (2 und 3) Förderbänder (10 und 11) umfassen, die in Bezug zu den Mähbalken (8 und 9) mittels von im Wesentlichen zu den Mähbalken (8 und 9) parallelen Achsen (14) angelenkt sind, ***dadurch gekennzeichnet,* dass** die Mäheinheiten (2, 3) Mittel (15 und 16) umfassen, die automatisch die Förderbänder (10 und 11) in Bezug zu den Mähbalken (8 und 9) um ihre Gelenkachsen (14) verschieben, um sie mehr den entsprechenden Tragrahmen (6 und 7) und folglich der Mitte der Mähmaschine bei Einstellung in die Transportposition anzunähern.

2. Mähmaschine nach Anspruch 1, ***dadurch gekennzeichnet,* dass** die Mittel (15 und 16) zum Verschieben jedes Förderbandes (10, 11) von zwei aneinander mittels einer Achse (19) angelenkten Stangen (17 und 18), wobei die erste (17) am entsprechenden Tragrahmen (6, 7) mittels einer Achse (20) und die zweite (18) auf dem entsprechenden Förderband (10, 11) mittels einer Achse (21) angelenkt sind, und von einer dritten Stange (22) gebildet sind, die an der ersten Stange durch eine Achse (23) und an dem Stützgestell (1) durch eine Achse (24) angelenkt ist.

3. Mähmaschine nach Anspruch 2, ***dadurch gekennzeichnet,* dass** die Gelenkachse (24) der dritten Stange (22) auf dem Stützgestell (1) in Bezug zur im Wesentlichen horizontalen Gelenkachse (4, 5) der entsprechenden Mäheinheit (2, 3) auf dem Stützgestell (1) versetzt ist.

4. Mähmaschine nach Anspruch 3, ***dadurch gekennzeichnet,* dass** die Gelenkachse (24) der dritten Stange (22) auf dem Stützgestell (1) näher zum Boden und/oder mehr zur Mitte der Mähmaschine als die Gelenkachse (4, 5) der entsprechenden Mäheinheit (2, 3) auf dem Stützgestell (1) angeordnet ist.

5. Mähmaschine nach irgend einem der vorhergehenden Ansprüche, ***dadurch gekennzeichnet,* dass** ein klappbarer Schwadablenker (25) an der Rückseite und über dem Förderband (10, 11) jeder Mäheinheit (2, 3) angeordnet ist.

6. Mähmaschine nach Anspruch 5, ***dadurch gekennzeichnet,* dass** sich der klappbare Ablenker (25) automatisch dem entsprechenden Förderband (10, 11) bei Einstellung in die Transportposition annähert.

7. Mähmaschine nach Anspruch 5 oder 6, ***dadurch gekennzeichnet,* dass** der klappbare Ablenker (25) von einem flexiblen Tuch (26) gebildet ist, das mit der Rückseite des entsprechenden Förderbandes (10, 11) und mit einer festen Schutzvorrichtung (27), die sich über dem entsprechenden Mähbalken (8, 9) befindet, verbunden ist, wobei das flexible Tuch (26) zusätzlich auf einer verschiebbaren Führung (28) verläuft.

8. Mähmaschine nach Anspruch 7, ***dadurch gekennzeichnet,* dass** die verschiebbare Führung (28) mit Befestigungsstabe (29) verbunden ist, die an der Rückseite des entsprechenden Förderbandes (10, 11) angelenkt sind.

9. Mähmaschine nach Anspruch 8, ***dadurch gekennzeichnet,* dass** die verschiebbare Führung (28) mittels eines Seils (30) mit einer Zugfeder (31) verbunden ist, die dazu neigt, sie vom entsprechenden Förderband (10, 11) zu entfernen.

10. Mähmaschine nach Anspruch 9, ***dadurch gekennzeichnet,* dass** das Seil (30) über eine Rolle (32) läuft, die mit dem entsprechenden Tragrahmen (6, 7) verbunden ist.
